# EUROPÄISCHE PATENTSCHRIFT

(11) **EP 0 755 322 B1**
(45) Veröffentlichungstag und Bekanntmachung des Hinweises auf die Patenterteilung: **29.07.1998**
(21) Anmeldenummer: 95917927.6
(22) Anmeldetag: 13.04.1995
(51) Int. Cl.: B29C 69/00, B65D 47/14, B29B 11/08, B29C 45/00

(54) **VERFAHREN ZUR HERSTELLUNG EINER TUBE AUS KUNSTSTOFF**
PROCESS FOR MANUFACTURING A TUBE FROM PLASTIC
PROCEDE DE PRODUCTION D'UN TUBE EN PLASTIQUE

(30) Priorität: 14.04.1994 DE 4412907
(43) Veröffentlichungstag der Anmeldung: 29.01.1997
(73) Patentinhaber: AISA AUTOMATION INDUSTRIELLE SA, 1896 Vouvry (CH)
(72) Erfinder: KELLER, Gerhard, CH-1805 Jongny (CH)
(74) Vertreter: Patentanwälte Zellentin & Partner
(86) Internationale Anmeldenummer: EP9501395
(87) Internationale Veröffentlichungsnummer: WO9528274

(56) Entgegenhaltungen:
- WO-A-90/11938
- GB-A- 1 198 617
- GB-A- 2 246 317
- DATABASE WPI Section Ch, Week 8812 Derwent Publications Ltd., London, GB; Class A92, AN 88-080704 & JP-A-63 033 243 ( KOA GLASS KK) , 12.Februar 1988

## Beschreibung

Die Erfindung betrifft ein Verfahren zum Herstellen eines Behälters mit einer Ausgabeöffnung und mit einem über der Ausgabeöffnung anordenbaren, diese verschließenden, Deckel, wobei der Körper des Behälters und der Deckel miteinander durch ein Scharnier verbunden in einem Arbeitsgang durch Spritzgießen als Rohling hergestelt werden und der Rohling einer Weiterbearbeitung zum fertigen Behälter unterzogen wird.

Aus der WO 90/11938 und der GB-A-22 46 317 sind derartige Verfahren zur Herstellung eines geschlossenen Behälters mit einer Ausgabeöffnung und mit einem verbundenen Verschluß bekannt, wonach der Teil des Behälters mit dem Verschlußdeckel und der Ausgabeöffnung, der mit einem am anderen Ende geschlossenen Rohrteil mit geringerem Durchmesser als dem der Ausgabeöffnung verbunden ist, in einem Spritzvorgang hergestellt wird. Danach wird der unten geschlossene Rohrteil durch einen Blasvorgang in einem die gewünschte Form wiedergegebenen Formkörper aufgeweitet, wobei u. a. eckige aber auch konische Formen erzielbar sind.

Dieses Verfahren ist, wegen der Notwendigkeit für den Blasvorgang einen Formkörper mit der jeweils gewünschten Form vorzusehen, insbesondere dann aufwendig, wenn verschieden gestaltete Behälter hergestellt werden sollen.

Aufgabe der Erfindung ist es, ein Verfahren zum Herstellen von Behältern dahingehend zu vereinfachen, daß der Behälter samt Verschluß in einem einzigen Arbeitsgang herstellbar und seine Form unterschiedlichen Gegebenheiten leicht anpaßbar ist.

Diese Aufgabe wird durch ein Verfahren mit den Merkmalen des Anspruchs 1 gelöst.

Weitere vorteilhafte Ausgestaltungen der Erfindung sind den Unteransprüchen zu entnehmen.

Unter Behälter wird hier jeder Behälter, insbesondere auch eine Tube verstanden, der bzw. die an einem Ende eine Ausgabeöffnung aufweist, deren Durchmesser geringer als der des Körpers des Behälters ist und der am anderen Ende zum Befüllen offen ist. Die Ausgabeöffnung ist durch einen Deckel verschließbar, der mittels mindestens eines Stegs mit dem Behälterkörper derart in Verbindung steht, daß er auf einfache Weise über die Ausgabeöffnung diese abdeckend aufsetzbar bzw. aufschwenkbar ist. Der Deckel ist dabei beliebig oft zu öffnen und zu schließen. Der Deckel kann noch Dichtungslippen oder sonstige, eine Auslaufscherung bildende Dichtelemente aufweisen. Vorzugsweise können auch Schnappverschlüsse beliebiger bekannter Art oder sonstige Riegelelemente vorgesehen sein, die eine Arretierung und Sicherung des Deckels in seiner die Ausgabeöffnung dicht abschließenden Stellung gewährleisten.

Der Steg zwischen dem Verschlußdeckel, der auch in eine auf dem Tubenkörper angelenkte Kappe integriert sein kann, kann als ein Band oder auch aus mehreren Bändern oder als ein Scharnier oder auch mehrere Scharniere bildende Materialverdünnung gestaltet sein.

Der Rohrkörper kann mit einer etwas stärkeren Wandung und relativ kurzer Länge zusammen mit der Deckelverbindung in einer Spritzgußform in einem Spritzvorgang hergestellt werden. Bei kurzer Länge und/oder dickerer Wandung des Rohrkörpers gestaltet sich die Spritzform und der Spritzvorgang einfacher. Dann besteht die Möglichkeit, in einer zweiten Arbeitsstufe, den Rohrkörper auf die gewünschte Rohrkörperlänge in einem Streckverfahren zu ziehen. Es besteht aber auch die Möglichkeit, den Rohrkörper sowohl aufzuweiten und/oder zu strecken oder auch konisch herzustellen. Hierbei kann ausgehend vom Deckel die Wandstärke auch kontinuierlich oder auch stufenweise ab- oder zunehmen - gegebenenfalls auch im Wechsel - gestaltet sein.

Im Falle der Weiterbehandlung des Rohrkörpers kann eine Spritzgußform Ausgangspunkt für einen relativ kompakten, den fertigen Deckel enthaltenden Rohling sein, dessen endgültige Form in weitem Bereich durch Strecken und/oder Aufweiten veränderbar ist, so daß für verschiedene Behälterformen nur eine einzige Spritzgußform benötigt wird.

Bei z. B. unmittelbar hergestellten Tuben mit längerem Rohrkörper kann der Rohrkörper auf die jeweils gewünschte Länge abgeschnitten werden. Wird zunächst ein Rohling hergestellt, dessen Rohrkörper in einem zweiten Schnitt einem Formveränderungsvorgang unterzogen wird, kann es erforderlich sein, einen Begradigungsschnitt vorzusehen, der zusätzlich zu einem - oder auch gleichzeitig als - Längenschnitt ausgeführt werden kann.

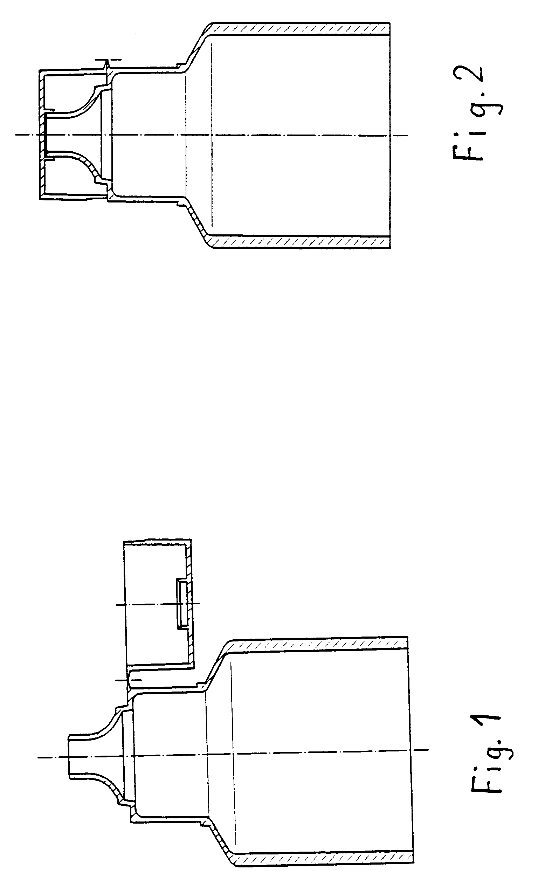

Fig. 1 zeigt ein Ausführungsbeispiel eines Tubenrohlings mit einer verschwenkbaren Kappe, in die der Deckel zum Verschluß der Ausgabeöffnung mit einem Dichtring integriert ist. Fig. 2 zeigt den Tubenrohling gemäß Fig. 1 mit in die Schließstellung verschwenkter Kappe, in der der integrierte Deckel die Ausgabeöffnung verschließt.

### Beispiel

Ein Rohling mit einem integrierten Klappdeckelverschluß wird aus Polypropylen mit einem Durchmesser von 35 mm, mit einer Wandstärke von 0,95 mm und einer Länge von 50 mm hergestellt.

Der Rohling wurde während 18 s auf 130 °C erwärmt und bekannten temperierten Zieh- oder Streckwerkzeugen zugeführt. Der Streckdorn wurde auf 75 °C und der Streckring auf 80 °C erwärmt. Die Streckgeschwindigkeit lag bei 300 mm/s und es wurde ein Streckverhältnis von 3,4:1 eingehalten, um eine Tube mit einer beschnittenen Länge von 170 mm und einer Wandstärke von 0,23 mm zu erzeugen.

## Patentansprüche

1. Verfahren zum Herstellen eines Behälters mit einer Ausgabeöffnung und mit einem über der Ausgabeöffnung anordenbaren, diese verschließenden, Deckel, wobei der Körper des Behälters und der Deckel miteinander durch ein Scharnier verbunden in einem Arbeitsgang durch Spritzgießen als Rohling hergestellt werden und der Rohling einer Weiterbearbeitung zum fertigen Behälter unterzogen wird,
**dadurch gekennzeichnet,**
daß der Rohling mit einem Rohrkörper mit der Ausgabeöffnung an einem Ende mit einem offenen Ende am anderen Ende hergestellt wird, wobei der Durchmesser der Ausgabeöffnung gegenüber dem Durchmesser des Rohrkörpers geringer ist, und daß der Rohrkörper des Rohlings einem Strecken zur Verlängerung des Rohrkörpers unterzogen wird.

2. Verfahren nach Anspruch 1,
**dadurch gekennzeichnet,**
daß der Rohrkörper zusätzlich aufgeweitet wird.

3. Verfahren nach Anspruch 2,
**dadurch gekennzeichnet,**
daß das Aufweiten konisch erfolgt.

4. Verfahren nach einem der Ansprüche 1 bis 3,
**dadurch gekennzeichnet,**
daß das Scharnier in Form mindestens eines flexiblen Stegs hergestellt wird.

5. Verfahren nach einem der Ansprüche 1 bis 3,
**dadurch gekennzeichnet,**
daß das Scharnier durch Materialverdünnung hergestellt wird.

## Claims

1. Process for the production of a container with an outlet aperture and with a cap, which may be arranged over the outlet aperture and close this, whereby the body of the container and the cap are connected to one another by means of a hinge, are produced in one work cycle as a blank by means of injection moulding, and the blank is subjected to further processing to form the finished container,
characterised in that the blank is produced with a tube body with the outlet aperture at one end and an open end at the other end, whereby the diameter of the outlet aperture is smaller than the diameter of the tube body, and that the tube body of the blank is subjected to drawing to extend the tube body.

2. Process according to Claim 1, characterised in that the blank is additionally widened.

3. Process according to Claim 2, characterised in that the widening is conical.

4. Process according to one of Claims 1 to 3, characterised in that the hinge is produced in the form of at least one flexible web.

5. Process according to one of Claims 1 to 3, characterised in that the hinge is produced by thinning the material.

## Revendications

1. Procédé de production d'un récipient comportant une orifice de sortie et un couvercle, pouvant être agencé au-dessus de l'orifice de sortie et fermant celui-ci, le corps du récipient et le couvercle étant reliés par une charnière et étant produits en une seule opération par moulage par injection sous forme d'une ébauche, l'ébauche étant soumise à un traitement ultérieur en vue de la production du récipient fini,
caractérisé en ce que:
l'ébauche est produite avec un corps tubulaire, comportant une ouverture de sortie au niveau d'une extrémité et une extrémité ouverte au niveau de l'autre extrémité, le diamètre de l'orifice de sortie étant ainsi inférieur au diamètre du corps tubulaire, le corps tubulaire de l'ébauche étant soumis à un étirage en vue de l'allongement du corps tubulaire.

2. Procédé selon la revendication 1, caractérisé en ce que le corps tubulaire est en outre évasé.

3. Procédé selon la revendication 2, caractérisé en ce que l'évasement est conique.

4. Procédé selon l'une des revendications 1 à 3, caractérisé en ce que la charnière est produite au moins sous forme d'une traverse flexible.

5. Procédé selon l'une des revendications 1 à 3, caractérisé en ce que la charnière est produite par amincissement du matériau.
